# EUROPÄISCHE PATENTSCHRIFT

(11) **EP 2 083 261 B1**
(45) Veröffentlichungstag und Bekanntmachung des Hinweises auf die Patenterteilung: **08.04.2015**
(21) Anmeldenummer: 08170085.8
(22) Anmeldetag: 27.11.2008
(51) Int. Cl.: G01N 21/89, G01N 21/85

(54) **Vorrichtung zum Erfassen und Erkennen von Objekten**
Device for recording and recognising objects
Dispositif de détermination et de reconnaissance d'objets

(30) Priorität: 24.01.2008 AT 4708 U
(43) Veröffentlichungstag der Anmeldung: 29.07.2009
(73) Patentinhaber: Binder & Co. Aktiengesellschaft, 8200 Gleisdorf (AT)
(72) Erfinder: Huber, Reinhold, 8280 Fürstenfeld (AT)
(74) Vertreter: Kliment, Peter

(56) Entgegenhaltungen:
- EP-A- 1 205 745
- US-A- 5 414 489
- US-A- 5 479 009
- US-B1- 6 796 697

## Beschreibung

Vorrichtung zum Erfassen und Erkennen von Objekten eines Materialstromes, umfassend mindestens eine Kamera, welche Bilddaten der Objekte an eine Auswerteeinrichtung zwecks Ermittlung von Eigenschaften der Objekte des Materialstromes wie Materialzusammensetzung, Farbe, Größe oder dergleichen übermittelt, sowie eine beliebige Anzahl vorzugsweise reihenförmig angeordneter Leucht-Dioden, welche einer Beleuchtung des Materialstromes dienen, wobei der Materialstrom mittels eines Förderelementes transportiert und an einem Erfassungsbereich der Kamera(s) vorbeigeführt wird und wobei zwischen den Leucht-Dioden und dem vorzugsweise am Förderelement lokalisierten Erfassungsbereich eine optische Einrichtung angeordnet ist, welche eine Diffusion des von den Leucht-Dioden emittierten Lichtes bewirkt, gemäß dem Oberbegriff des Anspruchs 1.

Bei derartigen Vorrichtungen zum Erfassen und Erkennen von Objekten, z.B. in Sortieranlagen, werden Kameras, meistens Zeilenkameras, eingesetzt, an denen Objekte eines Materialstromes vorbeigeführt und von den Kameras bzw. von einer mit den Kameras assoziierten Auswerteeinrichtung entsprechend erkannt und zugeordnet werden. Diese Erkennung und Zuordnung kann sich auf verschiedene Eigenschaften der Objekte beziehen wie etwa Materialzusammensetzung, Farbe, Größe oder dergleichen. Die so gewonnenen Informationen dienen in weiterer Folge einer Steuerung nachfolgender Prozessabläufe, insbesondere der Steuerung einer Sortiereinrichtung, die die Objekte in unterschiedliche Fraktionen sortiert.

Durchsichtige oder durchscheinende Güter werden hierbei im Durchlicht- bzw. Transmissionsverfahren analysiert. Die Lichtquellen durchleuchten dabei den zu analysierenden Materialstrom, wobei den Lichtquellen gegenüberliegende Kameras das den Materialstrom durchscheinende Licht der Lichtquellen empfangen, was eine zuverlässigere Erkennung, etwa der einzelnen Fraktionen eines Sortiergutes, ermöglicht. Als Lichtquellen für das Durchleuchten können Leuchtstoffröhren verwendet werden.

Bei Sortiereinrichtungen neuerer Bauart werden jedoch bevorzugt Leucht-Dioden (LEDs) als Lichtquellen verwendet, da sich diese aufgrund ihrer Energieeffizienz und aufgrund einer selektiven Ansteuerbarkeit hinsichtlich Helligkeit und/oder Frequenz als vorteilhaft erweisen. Eine derartige Sortiereinrichtung ist beispielsweise aus der US 5355084 bekannt.

Die Leucht-Dioden werden üblicherweise reihen- bzw. matrixförmig angeordnet und erstrecken sich zur Gänze oder teilweise über die Breite eines jeweiligen Förderelementes, auf welchem der Materialstrom transportiert wird. Beim Förderelement handelt es sich etwa um eine transparente Rutsche einer Sortieranlage oder um ein transparentes Förderband.

Um Objekte des Materialstroms zuverlässig analysieren und erkennen zu können, ist es von Bedeutung, dass ein jeweils vorgesehener Erfassungsbereich der Kamera, also ein definierter Abschnitt des Förderelementes, möglichst gleichmäßig, d.h. mit gleichmäßiger Strahlungsintensität ausgeleuchtet wird.

Die vorliegende Erfindung betrifft somit die Erzeugung bzw. Aufbereitung jenes Lichtes, welches auf den Objekten des Materialstromes auftrifft bzw. durch die Materialstrom-Objekte hindurchscheint oder von diesen reflektiert wird, um anschließend von einer oder mehreren Kameras erfasst und ausgewertet zu werden. Insofern könnte beim von den Leucht-Dioden abgestrahlten Licht auch von "Informationslicht" die Rede sein, also von Licht, welches (im Unterschied zu diversen Hintergrundbeleuchtungen) zu jenem Zweck mit den Objekten des Materialstromes in Kontakt gebracht wird, um Aufschluss über deren Eigenschaften zu geben.

Da die Leucht-Dioden annähernd punktförmige Lichtquellen darstellen, bedarf es zur Erzielung einer gleichmäßigen Beleuchtung des Materialstroms bzw. des Förderelementes weiterer Maßnahmen. In der EP 1 205 745 B1 wird daher vorgeschlagen, zwischen den Leucht-Dioden und dem Förderelement eine optische Einrichtung anzuordnen, welche eine Diffusion des von den Leucht-Dioden emittierten Lichtes bewirkt. Die optische Einrichtung umfasst hierbei einen objektseitigen Diffusor, einen diodenseitigen Diffusor, sowie eine dazwischenliegende Linse.

Die als Streufolien ausgeführten Diffusoren wandeln hierbei das von den annähernd punktförmigen Leucht-Dioden emittierte Licht in diffuses Licht um, wobei die Linse dazu dient, das vom diodenseitigen Diffusor abgestrahlte Licht in seiner Lichtstärke zu steuern und zu vergleichmäßigen.

Obwohl also durch eine derartige optische Einrichtung bereits eine wesentliche Verbesserung der Beleuchtung des Materialstroms bzw. des Kamera-Erfassungsbereichs erzielt wurde, besteht weiterer Entwicklungsbedarf.

Die beschriebene optische Einrichtung bedingt nämlich eine relativ aufwändige und kostenintensive Fertigung.

Als Leucht-Dioden dürfen nur LEDs mit im Wesentlichen einheitlicher Lichtstärke eingesetzt werden. Ist die Lichtstärketoleranz der Leucht-Dioden zu groß, so würden die mittels der Kamera detektierten, unterschiedlichen Strahlungsintensitäten einzelner Leucht-Dioden zu einer schlechteren Erkennung von zu sortierenden Objekten bzw. zu einer verminderten Klassifizierungsgüte einzelner Sortierfraktionen führen.

Um eine zufrieden stellende Erkennung unterschiedlicher Objekte des Materialstroms zu gewährleisten, muss als Linse ein poliertes Plexiglaselement höchster Qualität eingesetzt werden, welche entsprechend kostenintensiv in der Fertigung ist.

Aus Gründen einer Anpassung an die Linsengeometrie bzw. einer gewünschten Strahlungsintensitätsverteilung muss bei Mehrkamerasystemen eine überlappende Anordnung der Linsen vorgenommen werden, was eine komplizierte Halterung der Linsen und der Diffusoren und somit ebenfalls einen hohen Fertigungsaufwand erforderlich macht.

Des weiteren reduzieren die bisher als Diffusoren eingesetzten Streufolien die Strahlungsintensität der Leucht-Dioden um bis zu 30%, was einen erhöhten Energiebedarf nach sich zieht.

In der Praxis ergeben sich bei gattungsgemäßen Systemen überdies - über die Breite des Erfassungsbereichs bzw. des Förderelementes betrachtet - immer noch beträchtliche Unterschiede der Strahlungsintensität. Da nämlich die Ausrichtung der von den Leucht-Dioden emittierten Lichtstrahlen im Wesentlichen zentrisch auf die Kamera bzw. ein Kameraobjektiv erfolgt, ergeben sich je nach Position der Leucht-Dioden relativ zur Kamera bzw. zum Kameraobjektiv örtlich unterschiedliche Strahlungswinkel der Lichtstrahlen. Bei Messungen im Transmissionsverfahren wird eine detektierte Strahlungsintensität jedoch wesentlich vom jeweils vorhandenen Strahlungswinkel beeinflusst, was dazu führt, dass im Erfassungsbereich lokal unterschiedliche Verhältnisse von gerichteten und ungerichteten Lichtstrahlungs-Anteilen vorgefunden werden.

Insbesondere in den Randbereichen des Erfassungsbereichs bzw. des Förderelementes kann es deshalb zu Fehldetektionen kommen. So werden etwa dunkelgrüne oder dunkelbraune Glasscherben im Materialstrom oft fälschlicherweise als (auszusortierende) Störstoffe klassifiziert, obwohl lediglich Objekte aus Keramik, Stein oder Porzellan ("KSP"-Objekte) aus dem Materialstrom auszusortieren wären.

Es ist daher das Ziel der vorliegenden Erfindung, die genannten Nachteile zu beseitigen und eine verbesserte Vorrichtung zum Erfassen und Erkennen von Objekten eines Materialstromes bereitstellen, die eine möglichst gleichmäßige Beleuchtung des Materialstroms bzw. eines am Förderelement vorgesehenen Erfassungsbereichs der Kamera(s) ermöglichen.

Entlang der gesamten Breite bzw. auf dem gesamten Areal des am Förderelement vorgesehenen Erfassungsbereichs soll eine im Wesentlichen gleich große Strahlungsintensität der von den Leucht-Dioden emittierten Lichtstrahlen gewährleistet sein, sodass eine höhere Erkennungsrate der im Materialstrom erfassten Objekte ermöglicht und Fehldetektionen vermieden werden.

Erfindungsgemäß wird dieses Ziel durch eine Vorrichtung mit den kennzeichnenden Merkmalen des Anspruchs 1 gelöst.

Eine gattungsgemäße Vorrichtung zum Erfassen und Erkennen von Objekten eines Materialstromes umfassend mindestens eine Kamera, welche Bilddaten der Objekte an eine Auswerteeinrichtung zwecks Ermittlung von Eigenschaften der Objekte des Materialstromes wie Materialzusammensetzung, Farbe, Größe oder dergleichen übermittelt, sowie eine beliebige Anzahl an vorzugsweise reihenförmig angeordneten Leucht-Dioden, welche einer Beleuchtung des Materialstromes dienen, wobei der Materialstrom mittels eines Förderelementes transportiert und an einem Erfassungsbereich der Kamera(s) vorbeigeführt wird.

In einer bevorzugten Ausgestaltung der erfindungsgemäßen Vorrichtung passiert das Förderelement hierbei den Kamera-Erfassungsbereich, sodass der Kamera-Erfassungsbereich also direkt am Förderelement lokalisiert ist. Ebenso wäre es jedoch möglich, dass das Förderelement die auf diesem transportierten Materialstrom-Objekte abwirft und der Kamera-Erfassungsbereich diesfalls auf den Fallweg bzw. auf eine Wurfparabel der frei fallenden Materialstrom-Objekte gerichtet ist, ohne dass sich das Förderelement im Hintergrund der Materialstrom-Objekte befinden würde.

Zwischen den Leucht-Dioden und dem (auf dem Förderelement transportierten oder im freien Fall befindlichen) Materialstrom ist eine optische Einrichtung angeordnet, welche eine Diffusion des von den Leucht-Dioden emittierten Lichtes bewirkt. Erfindungsgemäß ist es vorgesehen, dass die optische Einrichtung mindestens einen auf seinen Innenseiten verspiegelten Reflexionskanal umfasst.

Indem die von den Leucht-Dioden emittierten Lichtstrahlen im innenseitig verspiegelten Reflexionskanal mehrfach reflektiert werden, kann eine deutlich bessere Diffusion der Lichtstrahlen erzielt werden als bei Vorrichtungen gemäß dem Stand der Technik.

Die von mehreren Leucht-Dioden emittierten und in eine Licht-Eintrittsseite des Reflexionskanals eintretenden Lichtstrahlen können bei deren Austritt auf einer dem Kamera-Erfassungsbereich bzw. dem Materialstrom zugewandten Licht-Austrittsseite des Reflexionskanals hinsichtlich ihres Ursprungs nicht mehr einzelnen Leucht-Dioden zugeordnet werden. Hingegen ergibt sich entlang der gesamten Breite bzw. auf der gesamten Fläche der Licht-Austrittsseite des Reflexionskanals eine nahezu konstante Strahlungsintensität.

Das auf den Objekten des Materialstromes auftreffende und diese durchscheinende oder von diesen reflektierte Licht bietet aufgrund seiner gleichmäßigen Strahlungsintensität ideale Vorraussetzungen für ein nachfolgendes Erfassen und Auswerten der von den Materialstrom-Objekten auf die Kamera(s) gelangenden Lichtstrahlen.

Indem die verspiegelten Innenseiten des Reflexionskanals aufgrund ihrer Reflexionseigenschaften quasi das Vorhandensein zusätzlicher Lichtquellen bzw. Leucht-Dioden simulieren, ist der Abfall der Strahlungsintensität auch in den bisher hinsichtlich einer zufriedenstellenden Ausleuchtung kritischen Randbereichen Erfassungsbereichs bzw. des Förderelementes vernachlässigbar gering.

Durch die Gewährleistung einer gleichmäßigen Beleuchtung des Materialstroms bzw. des Kamera-Erfassungsbereichs wird eine sichere Erkennung von Objekten des Materialstroms ermöglicht und die Anzahl von Fehlerkennungen kann deutlich gesenkt werden.

Aufgrund der idealen Vergleichmäßigung der Strahlungsintensität durch den erfindungsgemäßen Reflexionskanal können fortan auch Leucht-Dioden mit größerer Lichtstärketoleranz eingesetzt werden, was die Herstellungskosten gattungsgemäßer Beleuchtungseinrichtungen verringert.

Als weiterer Vorteil der Erfindung ist anzuführen, dass bei Vorsehung eines erfindungsgemäßen Reflexionskanals anstelle konventioneller Streudiffusoren, welche viele Streupunkte in einer Ebene aufweisen, ein deutlich geringerer Verlust an Strahlungsintensität der von den Leucht-Dioden emittierten Lichtstrahlen stattfindet. Dies macht es wiederum möglich, Leucht-Dioden mit geringerer Leistungsaufnahme zu betreiben.

Im Gegensatz zu einem bereits bekannten Objekterkennungs-System, welches zufolge des Strahlungsintensitätsabfalls in den Randbereichen des Erfassungsbereichs eine im Verhältnis zur jeweiligen Erfassungsbereichs-Breite größere Baubreite der optischen Einrichtung (insbesondere der Linsen und Leucht-Dioden-Anordnung) - was im Falle Mehrfach-Kamerasystemen wiederum eine versetzte Anordnung der einzelnen Kameras erforderlich machte, um den Materialstrom lückenlos erfassen zu können - ist es nunmehr möglich, die einzelnen Kameras in einer Ebene anzuordnen. Im Falle einer Vorsehung mehrerer Kameras wird also eine vereinfachte Montage ermöglicht.

In einer bevorzugten Ausführungsvariante der vorliegenden Erfindung weist der Reflexionskanal einen im Wesentlichen rechteckigen Öffnungsquerschnitt auf, sodass sich also ein im Wesentlichen quaderförmiger Reflexionskanal ergibt. Indem die Innenseiten des Reflexionskanal jeweils unter einem Winkel von 90° zueinander angeordnet sind, wird eine vielfache Ablenkung und somit Streuung der in den Reflexionskanal eintretenden, von den Leucht-Dioden emittierten Lichtstrahlen erzielt. Darüber hinaus ist ein rechteckiger bzw. quaderförmiger Reflexionskanal einfach zu fertigen.

In einer Fortbildung der vorliegenden Erfindung ist es vorgesehen, dass sich der Öffnungsquerschnitt des Reflexionskanals in einer dem Erfassungsbereich zuweisenden Richtung, also in Lichtstrahlen-Emissionsrichtung erweitert.

Auf diese Weise wird eine günstigere Ausbreitungscharakteristik der von den Leucht-Dioden emittierten Lichtstrahlen erzielt und es kann ein größerer Erfassungsbereich ausgeleuchtet werden.

In praktischen Versuchen hat es sich erwiesen, dass eine besonders effiziente Streuung bzw. Vergleichmäßigung der von den Leucht-Dioden emittierten Lichtstrahlen eintritt, wenn das Größenverhältnis einer zwischen einer den Leucht-Dioden zugewandten Licht-Eintrittsseite und einer dem Erfassungsbereich zugewandten Licht-Austrittsseite gemessenen Längserstreckung des Reflexionskanals zu einer zur Längserstreckung normal verlaufenden Höhenerstreckung des Reflexionskanals in einem Bereich zwischen 5:1 bis 10:1, vorzugsweise in einem Bereich zwischen 6,5:1 bis 8,5:1 liegt.

Im Zusammenhang mit den gewählten Größenverhältnissen des Reflexionskanals ist es des weiteren von Bedeutung, wie groß ein auf den Reflexionskanal gerichteter Licht-Abstrahlwinkel der Leucht-Dioden ist. Die Größe des Licht-Abstrahlwinkels, also jenes kegelförmigen Bereichs, innerhalb welchem von den Leucht-Dioden Lichtstrahlen abgestrahlt werden, ist so gewählt, dass sich bei den vorangehend genannten Größenverhältnissen des Reflexionskanals eine optimale Streuung der von den Leucht-Dioden abgestrahlten Lichtstrahlen ergibt. In einer bevorzugten Ausführungsvariante der Erfindung ist es daher vorgesehen, dass Licht-Abstrahlwinkel der Leucht-Dioden in einem Bereich zwischen 90° und 150°, vorzugsweise in einem Bereich zwischen 110° und 130° liegt.

Bei einer zu kurz gewählten Längserstreckung des erfindungsgemäßen Reflexionskanals ergäbe sich eine zu geringe Streuung bzw. Vergleichmäßigung der von den Leucht-Dioden emittierten Lichtstrahlen, während bei einer zu groß gewählten Längserstreckung des Reflexionskanals mit einem Intensitätsverlust der Lichtstrahlen zu rechnen wäre, ohne dass jedoch eine relevante Verbesserung hinsichtlich der Lichtstrahlen-Streuung erzielt würde.

Beruhend auf experimenteller Forschungsarbeit zur optimalen Dimensionierung des erfindungsgemäßen Reflexionskanals ist es daher in einer bevorzugten Ausführungsvariante vorgesehen, dass der Reflexionskanal eine Längserstreckung von mindestens 60 [mm], vorzugsweise eine Längserstreckung zwischen 80 [mm] und 100 [mm] aufweist.

Hierbei weist der Reflexionskanal eine normal zur Längserstreckung verlaufende Höhenerstreckung zwischen 5 [mm] und 20 [mm], vorzugsweise eine Höhenerstreckung zwischen 9 [mm] und 15 [mm] auf.

Durch derartige Größendimensionierungen des Reflexionskanals ist eine höchst effiziente Streuung bzw. Vergleichmäßigung der von den Leucht-Dioden emittierten Lichtstrahlen sowie eine optimale Energieeffizienz der Leucht-Dioden gewährleistet.

In einer bevorzugten Ausführungsvariante der vorliegenden Erfindung ist der Reflexionskanal in kostengünstiger Weise aus Blech gefertigt.

In einer Fortbildung der vorliegenden Erfindung ist es vorgesehen, dass die optische Einrichtung mindestens eine Fresnel-Linse umfasst. Durch Vorsehung einer (stufenförmigen) Fresnel-Linse kann eine noch bessere Diffusion und optische Ausrichtung der von den Leucht-Dioden emittierten Lichtstrahlen erzielt und somit die Detektionsgüte der erfindungsgemäßen Vorrichtung erhöht werden.

In einer bevorzugten Ausführungsvariante ist es weiters vorgesehen, mehrere Fresnel-Linsen hintereinander anzuordnen, um im Erfassungsbereich eine ideal vergleichmäßigte Strahlungsintensität der von den Leucht-Dioden emittierten Lichtstrahlen zu erzielen.

In einer bevorzugten Anordnungsvariante ist es vorgesehen, dass die mindestens eine Fresnel-Linse zwischen dem Reflexionskanal und dem (vorzugsweise am Förderelement lokalisierten) Erfassungsbereich angeordnet ist. Auf diese Weise können allfällige auf der Licht-Austrittsseite des Reflexionskanals vorhanden Unregelmäßigkeiten der Strahlungsintensität egalisiert werden.

In einer weiteren bevorzugten Anordnungsvariante der Erfindung ist es vorgesehen, dass es sich bei den Leucht-Dioden um gepulst betreibbare Leucht-Dioden, vorzugsweise um gepulst betreibbare RGB- sowie UV-Leucht-Dioden handelt. Auf diese Weise kann die von den Kameras gemessene Strahlungsintensität maximiert bzw. die Kamerazeilen-Erkennungsrate erhöht werden. Der Einsatz von gepulsten RGB- und UV-Leucht-Dioden erweist sich insbesondere zur Sonderglaserkennung als besonders vorteilhaft.

Die Erfindung wird nun anhand eines Ausführungsbeispiels näher erläutert. Dabei zeigt:
- Fig.1: eine schematische Darstellung einer Sortiereinrichtung gemäß dem Stand der Technik
- Fig.2: eine schematische Darstellung einer optischen Einrichtung zur Vergleichmäßigung der Strahlungsintensität gemäß dem Stand der Technik
- Fig.3: eine schematische Darstellung eines Strahlungsintensitäts-Verlaufs entlang der Breite eines auf einem Förderelement lokalisierten Kamera-Erfassungsbereichs (bei eine Beleuchtungseinrichtung gemäß dem Stand der Technik)
- Fig.4: eine erste Ausführungsvariante einer erfindungsgemäßen Objekterkennungs-Vorrichtung in Seitenansicht
- Fig.5: eine erste Ausführungsvariante einer erfindungsgemäßen Objekterkennungs-Vorrichtung in isometrischer Explosions-Darstellung
- Fig.6: eine zweite Ausführungsvariante einer erfindungsgemäßen Objekterkennungs-Vorrichtung in isometrischer Explosions-Darstellung
- Fig.7: eine schematische Darstellung des Reflexionsverhaltens von Lichtstrahlen innerhalb eines erfindungsgemäßen Reflexionskanals
- Fig.8: eine schematische Darstellung des Reflexionsverhaltens von Lichtstrahlen innerhalb eines erfindungsgemäßen Reflexionskanals

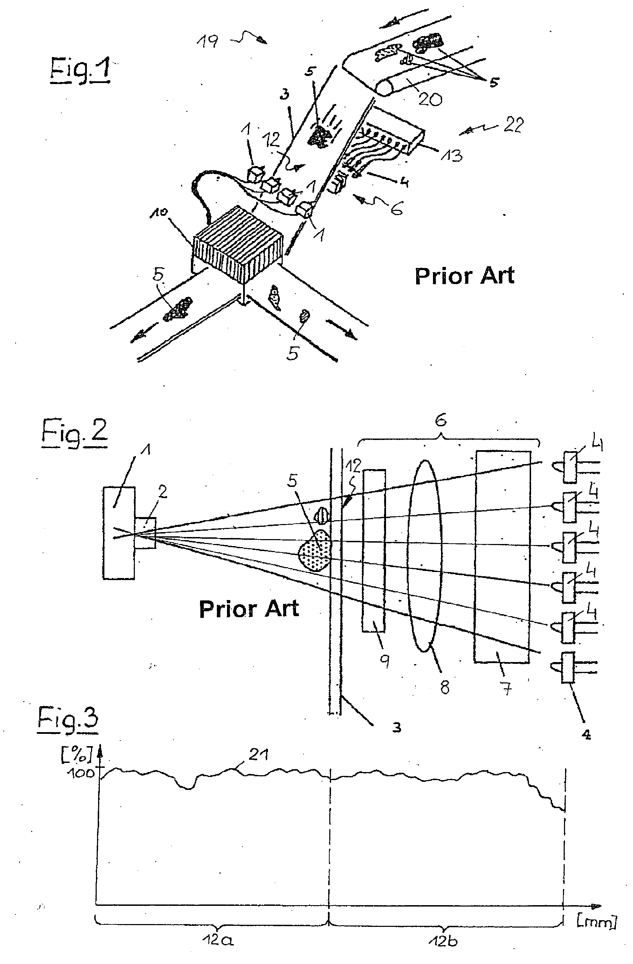

Fig.1 zeigt in schematischer Weise eine aus dem Stand der Technik bekannte Sortiervorrichtung, deren Aufbau - mit Ausnahme der Ausgestaltung einer optischen Einrichtung 6 - im Wesentlichen auch dem Aufbau einer im Folgenden beschriebenen erfindungsgemäßen Vorrichtung entspricht.

Ersichtlich ist eine Förderanlage 19, bei welcher mittels eines Rollenförderers 20 Objekte 5 eines zu selektierenden Materialstroms zu einem als Rutsche ausgeführten Förderelement 3 befördert werden.

Die auf dem Förderelement 3 geführten Objekte 5 des Materialstroms, bewegen sich, der Schwerkraft folgend, an einem Erfassungsbereich 12 von nebeneinander angeordneten Kameras 1 vorbei. Die Kameras 1 sind in einer Weise nebeneinander positioniert, dass sich die Einzel-Erfassungsbereiche benachbarter Kameras 1 in der Ebene des Förderelementes 3 überlappen und gemeinsam den zu überwachenden Erfassungsbereich 12 ergeben. Als Erfassungsbereich 12 kann ein zeilenförmiger oder auch ein flächenförmiger Bereich des Förderelementes 3 definiert sein.

Es sei angemerkt, dass die Objekte 5 des Materialstroms auch in einer Position von den Kameras 1 detektiert werden können, in welchen sich die Objekte 5 nicht mehr auf dem Förderelementes 3 befinden, sondern von diesem abgeworfen wurden und sich im freien Fall befinden. In solchem Falle wäre der Kamera-Erfassungsbereich 12 nicht am Förderelement 3 lokalisiert, sondern in einem nicht substanziell lokalisierbaren Freifall-Bereich. Unabhängig von der konkreten Ausführungsvariante der Erkennungsvorrichtung liegt der Erfassungsbereich 12 jedenfalls stets im Bereich Förderwegs des Materialstroms.

Bei den Kameras 1 kann es sich um beliebige Sensorelemente handeln, welche zu einem Empfang optischer Informationen geeignet sind, z.B. für farb- oder monochromen Empfang geeignete CMOS-Flächenkameras.

Während auf der einen Seite des Förderelementes 3 bzw. des Erfassungsbereichs 12 die z.B. als Zeilenkameras ausgeführten und mit einer nicht dargestellten Auswerteeinrichtung sowie in weiterer Folge mit einer Sortiereinrichtung 10 verbundenen Kameras 1 angeordnet sind, so ist auf der anderen Seite des Erfassungsbereichs 12 bzw. des Förderelementes 3 eine Beleuchtungsvorrichtung 22 angeordnet.

Die Beleuchtungsvorrichtung 22 umfasst eine Vielzahl an Leucht-Dioden 4, welche über eine Steuerungsvorrichtung 13 variabel ansteuerbar sind und welche mittels von ihnen emittierter Lichtstrahlen das transparent ausgeführte Förderelement 3 sowie die Objekte 5 des Materialstroms (sofern diese ebenfalls transparent sind) durchleuchten. Als Leucht-Dioden 4 können z.B. Weißlicht- oder Infrarot-Dioden Einsatz finden.

In einer speziellen Ausführungsvariante der Erfindung handelt sich bei den Leucht-Dioden 4 um gepulst betreibbare LEDs, also um Leucht-Dioden mit gepulster Spannungs- bzw. Stromversorgung. Vorzugsweise werden hierbei gepulst betreibbare RGB-LEDs in Kombination mit gepulst betreibbaren UV-LEDs eingesetzt.

Besonders gute Bilddaten können durch einen Einsatz von gepulsten RGB- und UV-LEDs in Kombination mit einer monochromen CMOS-Flächenkamera erzielt werden.

Eine Anordnung gemäß Fig.1 bzw. Fig.2 entspricht also einer Objekterkennung im sogenannten Durchlicht- oder Transmissionsverfahren. Alternativ dazu wäre es auch möglich, die Beleuchtungsvorrichtung 22 bzw. die optische Einrichtung 6 auch auf jener Seite des Förderelementes 3 anzuordnen, an welcher auch die Kameras 1 angeordnet sind (was einer Objekterkennung im sogenannten Auflichtverfahren entspricht).

Die durch das Vorbeigleiten der Objekte 5 bedingten Modifikationen der von den Leucht-Dioden 4 emittierten Lichtstrahlen werden von den Kameras 1 erfasst, womit Aufschluss über verschiedene Eigenschaften jeweiliger Objekte 5 des Materialstroms, wie etwa Materialzusammensetzung, Farbe, Größe oder dergleichen gewonnen werden kann.

Die mittels der Kameras 5 generierten digitalen Bilder werden von der Auswerteeinrichtung nach vorgegebenen Kriterien analysiert, um die einzelnen Objekte 5 des Materialstroms hinsichtlich ihrer Beschaffenheit zu erkennen. Wird ein Objekt 5, z.B. aufgrund seiner hohen Lichtabsorption, als Störstoff qualifiziert, so kann es z.B. mittels Ausblasdüsen der Sortiereinrichtung 10 aus dem Materialstrom ausgeblasen bzw. in eine eigens dafür vorgesehenen Fraktion umgelenkt werden.

Im vorliegenden Ausführungsbeispiel interessiert insbesondere die Selektion eines Bruchglasmaterialstroms, wobei Störstoffe aus Keramik, Stein oder Porzellan (als "KSP"-Objekte bezeichnet) zu erkennen und in weiterer Folge aus dem Materialstrom auszuscheiden sind.

Da die Leucht-Dioden 4 annähernd punktförmige Lichtquellen darstellen, ist gemäß dem Stand der Technik eine in Fig.2 dargestellte optische Einrichtung zur Erzielung einer für eine eindeutige Objekterkennung erforderliche gleichmäßigere Beleuchtung des Erfassungsbereichs 12 vorgesehen. Die optische Einrichtung ist zwischen den Leucht-Dioden 4 und dem Kamera-Erfassungsbereich 12 (welcher im vorliegenden Ausführungsbeispiel am Förderelement 3 lokalisiert ist) angeordnet und umfasst einen objektseitigen, als Streufolie ausgeführten Diffusor 9, einen im Wesentlichen baugleichen diodenseitigen Diffusor 7, sowie eine dazwischen liegende Linse 8, sodass eine weitgehende Diffusion der von den Leucht-Dioden 4 emittierten Lichtstrahlen bewirkt wird.

Allerdings ergeben sich in der Praxis - über die Breite des Erfassungsbereichs 12 bzw. des Förderelementes 3 betrachtet - immer noch beträchtliche Unterschiede hinsichtlich der lokal vorhandenen Strahlungsintensität. Da nämlich die Ausrichtung der von den Leucht-Dioden 4 emittierten Lichtstrahlen im Wesentlichen zentrisch auf die Kamera 1 bzw. ein Kameraobjektiv 2 erfolgt, ergeben sich je nach Position der Leucht-Dioden 4 relativ zur Kamera 1 bzw. zum Kameraobjektiv 2 örtlich unterschiedliche Strahlungswinkel der Lichtstrahlen (siehe Fig.2). Dies führt dazu, dass im Erfassungsbereich 12 lokal unterschiedliche Verhältnisse von gerichteten und ungerichteten Lichtstrahlungs-Anteilen, also eine diskontinuierliche Strahlungsintensität vorgefunden wird.

Insbesondere in Randbereichen des Erfassungsbereichs 12 bzw. des Förderelementes 3 kann es deshalb zu Fehlerkennungen kommen bzw. ein Bruchglas-Objekt kann irrtümlicherweise als KSP-Objekt klassifiziert werden.

Ausschlaggebend für die Qualität der Objekt-Erkennungsfähigkeit der Sortiervorrichtung ist es aber, ob mittels der Leucht-Dioden 4 über die gesamte Breite des von den Kameras 1 überwachten Erfassungsbereichs 12 eine konstante Strahlungsintensität zum Beleuchten der Materialstrom-Objekte 5 realisiert werden kann. In Fig.3 ist in schematischer Weise ein Diagramm dargestellt, welches den Verlauf der in Prozent angegebenen Strahlungsintensität über einen z.B. 500 mm breiten Erfassungsbereich 12 darstellt. Dieser Erfassungsbereich 12 wird von zwei nebeneinander angeordneten Kameras abgedeckt, welche jeweils einen Einzel-Erfassungsbereich 12a, 12b von ca. 250 mm besitzen.

Die entlang der Erfassungsbereiche 12a, 12b zu verzeichnende Strahlungsintensität ist in der Praxis unstetig, sodass sich im Diagramm gemäß Fig.3 ein unregelmäßiger, der Strahlungsintensität entsprechender Kurvenverlauf 21 ergibt. Im Falle einer vollkommen gleichmäßig über den Erfassungsbereich 12 verteilten Strahlungsintensität würde sich anstelle des Kurvenverlaufs 21 eine horizontale Linie ergeben.

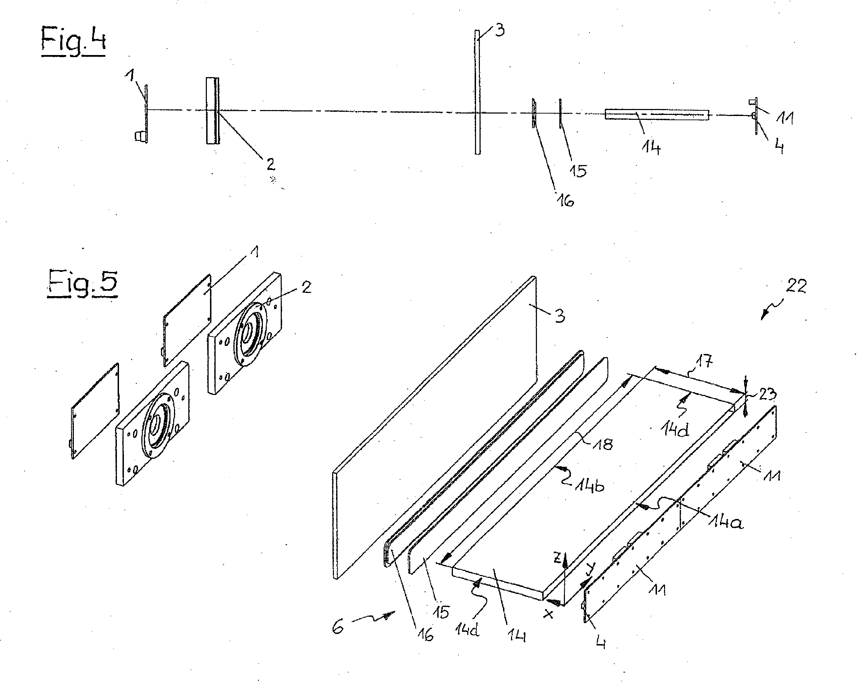

Obwohl eine derartige, vollkommen gleichmäßig über den Erfassungsbereich 12 verteilte Strahlungsintensität eine idealisierte Annahme darstellt und in der Praxis nicht erreichbar ist, so kann diese mittels einer in den Figuren 4-9 dargestellten erfindungsgemäßen optischen Einrichtung zumindest näherungsweise erreicht werden.

Fig.5 zeigt hierbei eine isometrische Explosionsdarstellung einer erfindungsgemäßen Objekterkennungsvorrichtung mit zwei in Form von Sensorplatten ausgeführten Kameras 1, welchen jeweils ein Kameraobjektiv 2 vorgeordnet ist. Eine Beleuchtungsvorrichtung 22 umfasst eine oder mehrere Platinen 11, auf welchen eine Vielzahl an Leucht-Dioden 4 reihenförmig angeordnet sind und Lichtstrahlen in Richtung des Förderelementes 3 emittieren. Zwischen den Leucht-Dioden 4 und dem Förderelement 3 ist eine optische Einrichtung 6 angeordnet, welche erfindungsgemäß mindestens einen auf seinen Innenseiten 14c verspiegelten Reflexionskanal 14 umfasst.

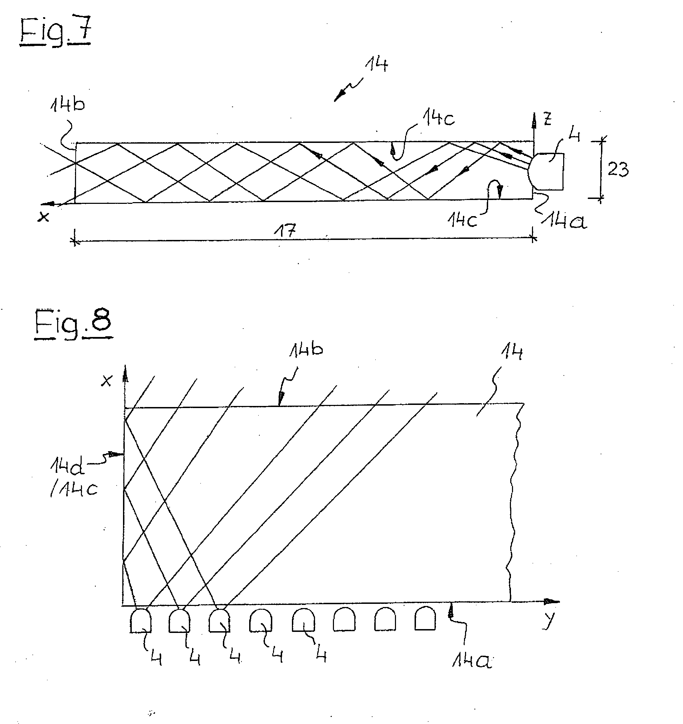

Der Reflexionskanal 14 besitzt eine den Leucht-Dioden 4 zugewandte Licht-Eintrittsseite 14a und eine den Leucht-Dioden 4 abgewandte bzw. dem Förderelement 3 zugewandte Licht-Austrittsseite 14b. Wie in Fig.7 schematisch dargestellt, werden die von den Leucht-Dioden 4 emittierten und in den Reflexionskanal 14 eintretenden Lichtstrahlen an den Innenseiten 14c des Reflexionskanals 14 mehrfach reflektiert und erfahren zufolge dieser Reflexion eine wesentliche Streuung, sodass die an der Licht-Eintrittsseite 14a des Reflexionskanals 14 eintretenden Lichtstrahlen bei deren Austritt auf der dem Förderelement 3 bzw. dem Materialstrom zugewandten Licht-Austrittsseite 14b hinsichtlich ihres Ursprungs nicht mehr einzelnen Leucht-Dioden 4 zugeordnet werden können. Hierbei ergibt sich auf einer gesamten Breite 18 bzw. auf der gesamten Fläche der Licht-Austrittsseite 14b des Reflexionskanals eine nahezu konstante Strahlungsintensität.

Der Reflexionskanal 14 ist in einer bevorzugten Ausführungsvariante aus Blech gefertigt, kann jedoch auch anderen Werkstoffen, z.B. aus einem Kunststoff hergestellt sein.

Die Spiegel- bzw. Reflexionseigenschaften der Innenseiten 14c des Reflexionskanals 14 können auf verschiedenste Weise hergestellt werden, so etwa durch eine entsprechende Oberflächenbehandlung wie z.B. Polieren oder durch Auftragen einer Oberflächenschicht mit hohen Reflexionseigenschaften oder durch Anbringen separater Spiegelelemente an den Reflexionskanal-Innenseiten 14c.

Es sei angemerkt, dass die Innenseiten 14c des Reflexionskanals 14 vorzugsweise vollkommen verspiegelt sind, gegebenenfalls jedoch auch lediglich teilweise verspiegelt sein können.

Der erfindungsgemäße Reflexionskanal 14 ist gemäß Fig.5 im Wesentlichen entlang einer normal zum Förderelement 3 verlaufenden Längsrichtung x angeordnet.

Es sei angemerkt, dass der Reflexionskanal 14 in mehrere Module unterteilt sein kann bzw. dass eine beliebige Anzahl an separaten Reflexionskanälen 14 je nach Einsatzerfordernis nebeneinander bzw. zueinander beabstandet angeordnet sein kann. In Abhängigkeit einer gewünschten Geometrie des Erfassungsbereichs 12 können die Reflexionskanäle 14 hierbei, ebenso wie die Leucht-Dioden(-Reihen) 4, sowohl in einer normal zur Längsrichtung x verlaufenden Querrichtung y, als auch in einer Höhenrichtung z (welche einer Materialstrom-Transportrichtung entspricht) nebeneinander angeordnet sein.

Fig.8 zeigt eine Ansicht des Reflexionskanälen 14 in einer der Höhenrichtung z entsprechenden Blickrichtung, wobei ersichtlich ist, wie die von den Leucht-Dioden emittierten Lichtstrahlen an einer im Wesentlichen entlang der Längsrichtung x verlaufenden Innenfläche 14c einer Seitenwand 14 d des Reflexionskanals 14 reflektiert werden, sodass sich auch in den hinsichtlich einer gleichmäßigen Ausleuchtung kritischen Randbereichen des Erfassungsbereichs 12 bzw. des Reflexionskanals 14 eine zufriedenstellend vereinheitlichte Strahlungsintensität ergibt.

Um eine effiziente Streuung bzw. Vergleichmäßigung der von den Leucht-Dioden 4 emittierten Lichtstrahlen zu erzielen, wurden in experimenteller Forschungsarbeit geeignete Geometrien bzw. Größenverhältnisse des erfindungsgemäßen Reflexionskanals 14 ermittelt.

So ist es erfindungsgemäß vorgeschlagen, dass das Größenverhältnis einer zwischen einer den Leucht-Dioden 4 zugewandten Licht-Eintrittsseite 14a und einer dem Erfassungsbereich 12 bzw. dem Förderelement 3 zugewandten Licht-Austrittsseite 14b gemessenen Längserstreckung 17 des Reflexionskanals 14 zu einer zur Längserstreckung 17 normal verlaufenden Höhenerstreckung 23 des Reflexionskanals 14 (eingezeichnet in Fig.5 und Fig.7) in einem Bereich zwischen 5:1 bis 10:1, vorzugsweise in einem Bereich zwischen 6,5:1 bis 8,5:1 liegt.

Im Zusammenhang mit den gewählten Größenverhältnissen des Reflexionskanals ist es des weiteren von Bedeutung, wie groß ein auf den Reflexionskanal gerichteter Licht-Abstrahlwinkel der Leucht-Dioden 4 ist. Die Größe des Licht-Abstrahlwinkels, also jenes kegelförmigen Bereichs, innerhalb welchem von den Leucht-Dioden 4 Lichtstrahlen in Richtung der Licht-Eintrittsseite 14a des Reflexionskanals 14 abgestrahlt werden, ist so gewählt, dass sich bei den vorangehend genannten Größenverhältnissen des Reflexionskanals eine optimale Streuung der von den Leucht-Dioden abgestrahlten Lichtstrahlen ergibt. In einer bevorzugten Ausführungsvariante der Erfindung ist es daher vorgesehen, dass der Licht-Abstrahlwinkel der Leucht-Dioden 4 in einem Bereich zwischen 90° und 150°, vorzugsweise in einem Bereich zwischen 110° und 130° liegt. Gemäß vorliegendem Ausführungsbeispiel hat sich ein Licht-Abstrahlwinkel der Leucht-Dioden 4 von 120° als besonders vorteilhaft erwiesen.

Als konkrete Maße zur Dimensionierung des Reflexionskanals 14 sind erfindungsgemäß eine Längserstreckung 17 von mindestens 60 [mm], vorzugsweise eine Längserstreckung 17 zwischen 80 [mm] und 100 [mm] sowie eine normal zur Längserstreckung 17 verlaufende Höhenerstreckung 23 zwischen 5 [mm] und 20 [mm], vorzugsweise eine Höhenerstreckung 23 zwischen 9 [mm] und 15 [mm] vorgeschlagen.

Als besonders ideal hinsichtlich der bereits beschriebenen optischen Kriterien hat sich ein Reflexionskanal 14 erwiesen, welcher eine Längserstreckung 17 von 90 [mm] und eine Höhenerstreckung 23 von 12 [mm], also ein Größenverhältnis der Längserstreckung 17 zur Höhenerstreckung 23 von 7,5:1 aufweist (dies bei einem Licht-Abstrahlwinkel der Leucht-Dioden 4 von 120°).

Eine (in Querrichtung y verlaufende) Breitenerstreckung 18 des Reflexionskanals 14 kann entsprechend einer jeweils vorhandenen Breite des Erfassungsbereichs 12 gewählt werden.

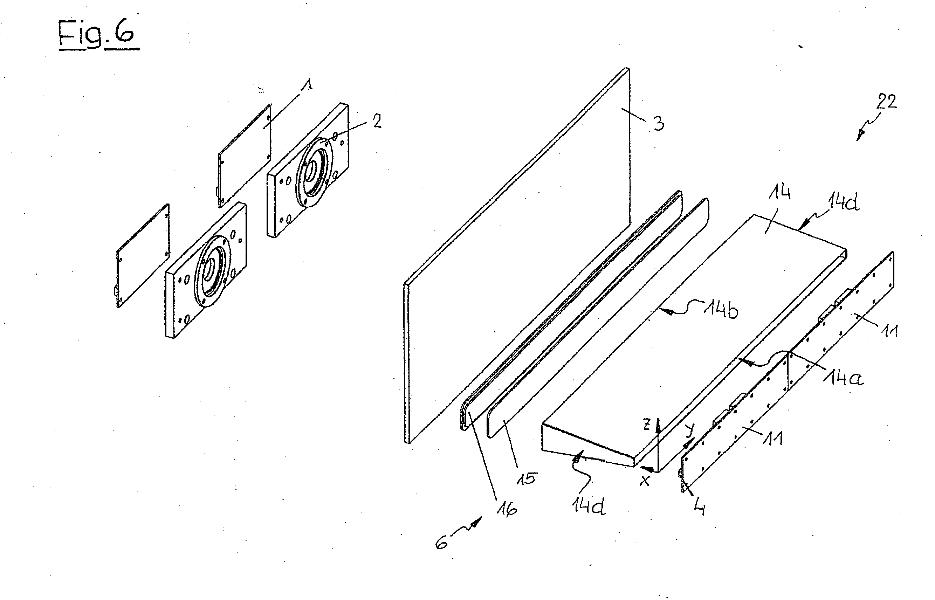

Während der Reflexionskanal 14 in einer ersten Ausführungsvariante gemäß Fig.5 einen im Wesentlichen rechteckigen Öffnungsquerschnitt bzw. eine Quaderform aufweist, so ist es gemäß einer in Fig.6 dargestellten zweiten Ausführungsvariante vorgesehen, dass sich der Öffnungsquerschnitt des Reflexionskanals 14 in einer dem dem Erfassungsbereich 12 bzw. dem Förderelement 3 zuweisenden Richtung, welche gemäß Fig.6 der Längsrichtung x entspricht, erweitert. Mit anderen Worten ist der Öffnungsquerschnitt des Reflexionskanals 14 auf Seiten der Licht-Austrittsseite 14b größer als auf der Licht-Eintrittsseite 14a. Die von den Leucht-Dioden 4 emittierten Lichtstrahlen erfahren auf diese Weise eine sehr effektive Streuung.

In einer Fortbildung der vorliegenden Erfindung ist es vorgesehen, dass die optische Einrichtung 6 mindestens eine Fresnel-Linse 15 umfasst. Durch Vorsehung einer Fresnel-Linse, der stufenförmiger Ringaufbau bereits hinreichend bekannt ist, wird eine sehr gute optische Ausrichtung der von den Leucht-Dioden 4 emittierten Lichtstrahlen und somit eine Vergleichmäßigung der im Erfassungsbereich 12 vorhandenen Strahlungsintensität erzielt.

Im vorliegenden Ausführungsbeispiel ist die Fresnel-Linse 15 dem Reflexionskanal 14 in Längsrichtung x nachgeordnet, also zwischen dem Erfassungsbereich 12 bzw. dem Förderelement 3 und der Licht-Austrittsseite 14b des Reflexionskanals 14 positioniert.

Es können auch mehrere Fresnel-Linsen 15 hintereinander angeordnet sein, um eine ideale Lichtcharakteristik im Erfassungsbereich 12 bzw. auf dem Förderelement 3 zu erzielen. Ebenso können mehrere Fresnel-Linsen 15 nebeneinander (in Querrichtung y oder in Höhenrichtung z), z.B. einander überlappend, angeordnet sein.

Gemäß vorliegendem Ausführungsbeispiel ist zwischen der Fresnel-Linse 15 und dem Förderelement 3 noch zumindest ein weiterer Diffusor 16 angeordnet, welcher einer noch besseren Diffusion der von den Leucht-Dioden 4 emittierten Lichtstrahlen bzw. einer optimalen Vergleichmäßigung der im Erfassungsbereich 12 vorhandenen Strahlungsintensität dient.

Bei dem Diffusor 16 kann es sich um einen Diffusor konventioneller Bauart handeln, z.B. um eine Streuscheibe oder eine Streufolie.

Die Fresnel-Linsen 15 werden ebenso wie der Reflexionskanal 14 und der optional vorgesehene Diffusor 16 mit nicht dargestellten Haltevorrichtungen gehalten. In einer bevorzugten Bauweise sind sämtliche in den Figuren 4-6 in Explosionsansicht dargestellten Bauteile der optischen Einrichtung 6 als einheitliches Modul ausgeführt.

Anstelle einer rechteckigen Ausführungsweise des Reflexionskanals 14 kann dieser je nach Einsatzerfordernis auch rund oder polygonal ausgeführt sein.

## Patentansprüche

1. Vorrichtung zum Erfassen und Erkennen von Objekten (5) eines Materialstromes, umfassend mindestens eine Kamera (1), welche Bilddaten der Objekte (5) an eine Auswerteeinrichtung zwecks Ermittlung von Eigenschaften der Objekte (5) des Materialstromes wie Materialzusammensetzung, Farbe, Größe oder dergleichen übermittelt, sowie eine beliebige Anzahl vorzugsweise reihenförmig angeordneter Leuchtdioden (4), welche einer Beleuchtung des Materialstromes dienen, wobei der Materialstrom mittels eines Förderelementes (3) transportiert und an einem Erfassungsbereich (12) der Kamera(s) vorbeigeführt wird und wobei zwischen den Leuchtdioden (4) und dem vorzugsweise am Förderelement (3) lokalisierten Erfassungsbereich (12) eine optische Einrichtung (6) angeordnet ist, welche eine Diffusion des von den Leuchtdioden (4) emittierten Lichtes bewirkt, **dadurch gekennzeichnet, dass** die optische Einrichtung (6) mindestens einen auf seinen Innenseiten (14c) verspiegelten Reflexionskanal (14) umfasst.

2. Vorrichtung nach Anspruch 1, **dadurch gekennzeichnet, dass** der Reflexionskanal (14) einen im Wesentlichen rechteckigen Öffnungsquerschnitt aufweist.

3. Vorrichtung nach Anspruch 1 oder 2, **dadurch gekennzeichnet, dass** sich der Öffnungsquerschnitt des Reflexionskanals (14) in Richtung einer dem Erfassungsbereich (12) zuweisenden Licht-Austrittsseite (14b) erweitert.

4. Vorrichtung nach einem der Ansprüche 1 bis 3, **dadurch gekennzeichnet, dass** das Größenverhältnis einer zwischen einer den Leuchtdioden (4) zugewandten Licht-Eintrittsseite (14a) und einer dem Erfassungsbereich (12) zugewandten Licht-Austrittsseite (14b) gemessenen Längserstreckung (17) des Reflexionskanals (14) zu einer dazu normal verlaufenden Höhenerstreckung (23) des Reflexionskanals (14) in einem Bereich zwischen 5:1 bis 10:1, vorzugsweise in einem Bereich zwischen 6,5:1 bis 8,5:1 liegt.

5. Vorrichtung nach Anspruch 4, **dadurch gekennzeichnet, dass** die Leuchtdioden (4) einen Licht-Abstrahlwinkel zwischen 90° und 150°, vorzugsweise einen Licht-Abstrahlwinkel zwischen 110° und 130° aufweisen.

6. Vorrichtung nach einem der Ansprüche 1 bis 5, **dadurch gekennzeichnet, dass** der Reflexionskanal (14) eine Längserstreckung (17) von mindestens 60 mm, vorzugsweise eine Längserstreckung (17) zwischen 80 mm und 100 mm aufweist.

7. Vorrichtung nach Anspruch 6, **dadurch gekennzeichnet, dass** der Reflexionskanal (14) eine Höhenerstreckung (23) zwischen 5 mm und 20 mm, vorzugsweise eine Höhenerstreckung (23) zwischen 9 mm und 15 mm aufweist.

8. Vorrichtung nach einem der Ansprüche 1 bis 7, **dadurch gekennzeichnet, dass** der Reflexionskanal (14) aus Blech gefertigt ist.

9. Vorrichtung nach einem der Ansprüche 1 bis 8, **dadurch gekennzeichnet, dass** die optische Einrichtung (6) mindestens eine Fresnel-Linse (15) umfasst.

10. Vorrichtung nach Anspruch 9, **dadurch gekennzeichnet, dass** die mindestens eine Fresnel-Linse (15) zwischen dem Reflexionskanal (14) und dem Erfassungsbereich (12) angeordnet ist.

11. Vorrichtung nach Anspruch 9 oder 10, **dadurch gekennzeichnet, dass** mehrere Fresnel-Linsen (15) hintereinander angeordnet sind.

12. Vorrichtung nach einem der Ansprüche 1 bis 11, **dadurch gekennzeichnet, dass** es sich bei den Leuchtdioden (4) um gepulst betreibbare Leuchtdioden, vorzugsweise um gepulst betreibbare RGB sowie UV-Leuchtdioden handelt.

## Claims

1. An apparatus for detecting and recognising objects (5) of a stream of material, comprising at least one camera (1) which transmits image data of the objects (5) to an evaluation device for the purpose of determining properties of the objects (5) of the stream of material such as the composition of the material, the colour, the size or the like, and an arbitrary number of light-emitting diodes (4) which are preferably arranged in rows and which are used for illuminating the stream of material, wherein the stream of material is transported by means of a conveying element (3) and is moved past a detection region (12) of the camera(s), and wherein an optical device (6) is arranged between the light-emitting diodes (4) and the detection region (12) which is preferably localised on the conveying element (3), which optical device produces a diffusion of the light emitted by the light-emitting diodes (4), **characterized in that** the optical device (6) comprises at least one reflection channel (14) which is mirror-coated on its inner sides (14c).

2. An apparatus according to claim 1, **characterized in that** the reflection channel (14) has a substantially rectangular opening cross-section.

3. An apparatus according to claim 1 or 2, **characterized in that** the opening cross-section of the reflection channel (14) expands in the direction of a light output side (14b) facing the detection region (12).

4. An apparatus according to one of the claims 1 to 3, **characterized in that** the proportion in size of a length extension (17 of the reflection channel (14) measured between a light input side (14a) facing the light-emitting diodes (4) and a light output side (14b) facing the detection region (12) to a height extension (23) of the reflection channel (14) extending normally thereto lies in a range of between 5:1 to 10:1, preferably in a range of between 6.5:1 to 8.5:1.

5. An apparatus according to claim 4, **characterized in that** the light-emitting diodes (4) have a light-emission angle of between 90° and 150°, preferably a light-emission angle of between 110° and 130°.

6. An apparatus according to one of the claims 1 to 5, **characterized in that** the reflection channel (14) has a longitudinal extension (17) of at least 60 mm, preferably a longitudinal extension (17) of between 80 mm and 100 mm.

7. An apparatus according to claim 6, **characterized in that** the reflection channel (14) has a height extension (23) of between 5 mm and 20 mm, preferably a height extension (23) of between 9 mm and 15 mm.

8. An apparatus according to one of the claims 1 to 7, **characterized in that** the reflection channel (14) is made of sheet metal.

9. An apparatus according to one of the claims 1 to 8, **characterized in that** the optical device (6) comprises at least one Fresnel lens (15).

10. An apparatus according to claim 9, **characterized in that** the at least one Fresnel lens (15) is arranged between the reflection channel (14) and the detection region (12).

11. An apparatus according to claim 9 or 10, **characterized in that** several Fresnel lenses (15) are arranged in succession.

12. An apparatus according to one of the claims 1 to 11, **characterized in that** the light-emitting diodes (4) concern light-emitting diodes which can be operated in a pulsed manner, preferably RGB and UV light-emitting diodes which can be operated in a pulsed manner.

## Revendications

1. Dispositif pour détecter et reconnaître des objets (5) faisant partie d'un flux de matière, comprenant au moins une caméra (1) dont les données d'image des objets (5) sont transmises à un dispositif d'analyse aux fins de détermination de propriétés des objets (5) du flux de matière telles que la composition du matériau, la couleur, la taille ou similaires, ainsi qu'un nombre quelconque de diodes électroluminescentes (4) disposées de préférence en rangées qui servent à éclairer le flux de matière, le flux de matière étant transporté au moyen d'un élément convoyeur (3) et passé devant une zone d'acquisition (12) de la (des) caméra(s) et un dispositif optique (6) étant disposé entre les diodes électroluminescentes (4) et la zone d'acquisition (12) située de préférence sur l'élément convoyeur (3), lequel réalise une diffusion de la lumière émise par les diodes électroluminescentes (4), **caractérisé en ce que** le dispositif optique (6) comprend au moins un canal de réflexion (14) tapissé de miroirs sur ses faces intérieures (14c).

2. Dispositif selon la revendication 1, **caractérisé en ce que** le canal de réflexion (14) présente une section d'ouverture essentiellement rectangulaire.

3. Dispositif selon la revendication 1 ou 2, **caractérisé en ce que** la section d'ouverture du canal de réflexion (14) s'élargit en direction d'un côté de sortie de la lumière (14b) orienté vers la zone d'acquisition (12).

4. Dispositif selon l'une des revendications 1 à 3, **caractérisé en ce que** le rapport de taille entre une étendue en longueur (17) du canal de réflexion (14) mesurée entre un côté d'entrée de la lumière (14a) tourné vers les diodes électroluminescentes (4) et un côté de sortie de la lumière (14b) tourné vers la zone d'acquisition (12) et une étendue en hauteur (23) du canal de réflexion (14) qui lui est perpendiculaire se situe dans une plage de 5 pour 1 à 10 pour 1, de préférence dans une plage de 6,5 pour 1 à 8,5 pour 1.

5. Dispositif selon la revendication 4, **caractérisé en ce que** les diodes électroluminescentes (4) présentent un angle d'émission lumineuse compris entre 90° et 150°, de préférence un angle d'émission lumineuse compris entre 110° et 130°.

6. Dispositif selon l'une des revendications 1 à 5, **caractérisé en ce que** le canal de réflexion (14) présente une étendue en longueur (17) d'au moins 60 mm, de préférence une étendue en longueur (17) comprise entre 80 mm et 100 mm.

7. Dispositif selon la revendication 6, **caractérisé en ce que** le canal de réflexion (14) présente une étendue en hauteur (23) comprise entre 5 mm et 20 mm, de préférence une étendue en hauteur (23) comprise entre 9 mm et 15 mm.

8. Dispositif selon l'une des revendications 1 à 7, **caractérisé en ce que** le canal de réflexion (14) est fait de tôle.

9. Dispositif selon l'une des revendications 1 à 8, **caractérisé en ce que** le dispositif optique (6) comprend au moins une lentille de Fresnel (15).

10. Dispositif selon la revendication 9, **caractérisé en ce que** l'au moins une lentille de Fresnel (15) est disposée entre le canal de réflexion (14) et la zone d'acquisition (12).

11. Dispositif selon la revendication 9 ou 10, **caractérisé en ce que** plusieurs lentilles de Fresnel (15) sont disposées les unes derrière les autres.

12. Dispositif selon l'une des revendications 1 à 11, **caractérisé en ce que** les diodes électroluminescentes (4) sont des diodes électroluminescentes pouvant fonctionner par impulsions, de préférence des diodes électroluminescentes RVB ou UV pouvant fonctionner par impulsions.
